(19) Europäisches Patentamt

European Patent Office

Office européen des brevets

(11) **EP 1 395 408 B1**

(12) **EUROPÄISCHE PATENTSCHRIFT**

(45) Veröffentlichungstag und Bekanntmachung des Hinweises auf die Patenterteilung:
**26.07.2006   Patentblatt 2006/30**

(21) Anmeldenummer: **01943394.5**

(22) Anmeldetag: **17.05.2001**

(51) Int Cl.:
***B29C 31/02*** *(2006.01)*

(86) Internationale Anmeldenummer:
**PCT/EP2001/005655**

(87) Internationale Veröffentlichungsnummer:
**WO 2002/092310 (21.11.2002 Gazette 2002/47)**

(54) **TRANSPORT VON HOCHVISKOSEN FLUIDEN IN GESCHLOSSENEN LEITUNGSSYSTEMEN**

TRANSPORT OF HIGHLY VISCOUS FLUIDS IN CLOSED PIPELINE SYSTEMS

TRANSPORT DE FLUIDES TRES VISQUEUX DANS DES SYSTEMES DE CONDUITES FERMES

(84) Benannte Vertragsstaaten:
**ES FR GB IT**

(43) Veröffentlichungstag der Anmeldung:
**10.03.2004   Patentblatt 2004/11**

(73) Patentinhaber: **tesa AG**
**20253 Hamburg (DE)**

(72) Erfinder:
• **KÖNIG, Sven**
**22337 Hamburg (DE)**
• **NEUHAUS-STEINMETZ, Hermann**
**22926 Ahrensburg (DE)**
• **REISER, Ulrich**
**25551 Hohenlockstedt (DE)**
• **GRITTNER, Norbert**
**22459 Hamburg (DE)**

(56) Entgegenhaltungen:
DE-A- 3 625 358          US-A- 4 397 630
US-A- 4 586 636          US-A- 4 630 382
US-A- 5 161 714

**Beschreibung**

Die Erfindung betrifft einen Apparat zur Vergleichmäßigung des Durchsatzes von insbesondere hochviskosen Fluiden in geschlossenen Leitungssystemen sowie Verfahren zur produktschonenden Zwischenspeicherung von insbesondere temperatursensiblen hochviskosen Fluiden in geschlossenen Leitungssystemen.

Hochviskose Flüssigkeiten wie zum Beispiel Polymerschmelzen, Polymerlösungen oder Lebensmittelzubereitungen werden innerhalb größerer Produktionsanlagen im allgemeinen in geschlossenen Leitungssystemen transportiert. Diese Flüssigkeiten sind bei den üblicherweise auftretenden Förderdrucken als inkompressibel anzusehen. Gleichzeitig sind die Leitungssysteme selbst volumenkonstant ausgeführt, um dem Förderdruck widerstehen zu können und um eine genaue Steuerung des geförderten Volumenstromes zuzulassen.

Deshalb ändert sich entlang eines geschlossenen Leitungssystems der Durchsatz der hochviskosen Flüssigkeit nur bei Einspeisung zusätzlichen Materials in das Leitungssystem oder bei Ausschleusung von Material aus dem Leitungssystem.

Ersteres kann durch druckaufbauende Aggregate wie zum Beispiel Extruder oder Pumpen erreicht werden, letzteres durch Ventile, Ablaßhähne oder Verarbeitungswerkzeuge wie zum Beispiel Düsen oder Spritzgußwerkzeuge. Die Art der verwendeten Aggregate und Armaturen und ihre Zusammenschaltung zu verfahrenstechnischen Anlagen ist überaus vielfältig.

Im folgenden wird deshalb am Beispiele der Verarbeitung von Schmelzklebstoffen eine derartige Anlage beschrieben.

Zu Beginn des Prozesses wird aus Rohstoffen und Zwischenprodukten die zu verarbeitende Klebmasse gemäß ihrer Formulierung hergestellt. Hierfür kommen zum Beispiel Mischtanks mit speziellen Mischaggregaten oder Knetmaschinen, Compoundierungs-Extruder und zahlreiche weitere Maschinentypen zum Einsatz. Wird bereits fertige Klebmasse eingesetzt, so muß diese schonend und gleichmäßig aufgeschmolzen werden. Dies geschieht beispielsweise in sogenannten Tankschmelzgeräten, in Faßschmelzanlagen, in Walzenschmelzen oder in Schmelz-Extrudem. Aus diesen Geräten wird der fertige Schmelzklebstoff durch eine Pumpe oder unter dem Eigendruck des Aggregates in eine Rohrleitung oder eine druckfeste Schlauchleitung eingespeist. In dieser Leitung sind meist mehrere Absperrarmaturen, Meßstellen für Druck und Temperatur, Schmelzefilter und vieles andere mehr fest installiert. Werden wechselnde Schmelzklebstoffe oder sehr große Mengen verarbeitet, so sind oft mehrere Linien zur Herstellung der Klebmassen vorhanden, die über entsprechende Rohrweichen und Absperrarmaturen miteinander verbunden sind.

Die Schmelze gelangt durch dieses Leitungssystem direkt in ein oder mehrere Auftragssysteme. Teil dieser Auftragssysteme ist in den meisten Fällen ein eigenes druckaufbauendes Organ wie zum Beispiel eine Zahnradpumpe, ein Kolbendosierer oder eine Förderschnecke. In einigen Fällen sind diese druckaufbauenden Organe zur Funktionsfähigkeit auf einen konstanten minimalen Vordruck angewiesen. Dies ist zum Beispiel oft bei Zahnradpumpen der Fall. Auftragssysteme für die geschmolzene Klebemasse auf ein Trägermaterial können zum Beispiel kontinuierlich arbeitende Düsen, etwa zur vollflächigen Beschichtung oder zum Streifenstrich sein, zum Raupenauftrag oder zum Wirbeisprühen. Genauso kommen intermittierende Auftragsverfahren zum Einsatz, bei denen der Klebstoffstrom in vorgegebenen Takten oder nach Bedarf von Hand unterbrochen wird, so zum Beispiel beim vollautomatischen Verkleben von Kartonagen oder beim Handauftrag mittels einer Kleberpistole. Nur in sehr seltenen Fällen kann man davon ausgehen, daß die Herstellung und die Verarbeitung der Schmelzklebstoffe mit genau den gleichen Durchsätzen erfolgt. Selbst in diesen Idealfällen muß berücksichtigt werden, daß schon geringe Durchsatzdifferenzen oder Pulsationen in vollständig gefüllten Leitungssystemen erhebliche Druckschwankungen verursachen, wenn fördersteife Organe wie zum Beispiel Schmelzepumpen oder Extruder als Fördermittel eingesetzt werden.

Schwankende Vordrucke beeinträchtigen aber zum Beispiel erheblich die Konstanz des Masseauftrags bei der vollflächigen Düsenbeschichtung. Deshalb sind aufwendige Regelkreise zum Schutz der Anlage und zur Gewährleistung einer hohen Produktqualität und eines stabilen Prozesses erforderlich.

Wesentlich häufiger wird eine diskontinuierliche Herstellung von Schmelzklebstoffen mit einer kontinuierlichen Verarbeitung kombiniert. Seltener kommen Kombinationen aus kontinuierlicher Herstellung und diskontinuierlicher Verarbeitung vor. In beiden Fällen muß maschinenbaulich für einen Ausgleich der unterschiedlichen Durchsätze gesorgt werden.

Der kurzzeitige Ausfall einer der Anlagenteile führt außerdem bei Kopplung von Herstellung und Verarbeitung von Schmelzklebstoffen durch ein vollständig gefülltes Leitungssystem zum unmittelbaren Ausfall auch des anderen, noch funktionsfähigen Anlagenteils, da entweder die Klebmasse nicht abgenommen werden kann oder keine Klebmasse zur Verfügung steht.

In allen hier skizzierten Fällen kann durch den Einsatz nicht fördersteifer Aggregate oder durch entsprechend konstruierte Ausgleichsvolumina Abhilfe geschaffen werden. Solche Ausgleichsvolumina können Puffertanks oder Pulsationsdämpfer sein.

Der Einsatz nicht fördersteifer Aggregate wie zum Beispiel pneumatischer Kolbenpumpen oder Zahnradpumpen mit geringen volumetrischen Wirkungsgraden führt im Betrieb zu durchsatzabhängigen mechanischen und thermischen Belastungen der zu fördernden Schmelzklebstoffe. Außerdem weisen Kolbenpumpen eine stark pulsierende Fördercharakteristik auf, die sie für kontinuierliche Auftragsverfahren ungeeignet macht.

Die Verwendung von konventionellen Puffertanks ist auf vergleichsweise niedrigviskose Fluide beschränkt, da ansonsten die vollständige Entleerung unter Schwerkrafteinfluß nicht gewährleistet ist. Selbst aufwendige Rührorgane oder Wandabstreifer können bei klebrigen und viskosen Substanzen keine Restentleerbarkeit sicherstellen. Zudem tritt bei kontinuierlichem Betrieb grundsätzlich eine Rückvermischung mit dem bereits im Puffertank befindlichen Material auf, was eine breite Verweilzeitverteilung und damit unkontrollierte Alterungsprozesse thermisch sensibler Schmelzkleber zur Folge hat.

Eine besondere Ausprägung des Puffertanks in Verbindung mit einer Zahnradpumpe stellt das Gear-In-Die(GID)-Prinzip dar. Einer Breitschlitzdüse ist dabei eine in voller Beschichtungsbreite ausgeführte Zahnradpumpe vorgeschaltet, die das zu beschichtende Fluid aus einem ebenso breiten Vorratsbehälter bezieht. Dieser ist rechtwinklig ausgeführt, nur partiell gefüllt und gegebenenfalls mit Druckluft beaufschlagt. Daraus ergeben sich erhebliche Nachteile, indem bei Verwendung hochviskoser Fluide der Fluidaustausch im kontinuierlichen Betrieb und die Restentleerung aufgrund der Wandhaftung nur sehr unvollständig möglich ist. Gleichzeitig kann über die der Luft ausgesetzte Oberfläche des Fluides eine thermisch-oxidative Alterung oder gar Zersetzung empfindlicher Fluide leicht eintreten.

Pulsationsdämpfer sind übliche Instrumente, um Druckschwankungen in Leitungssystemen auszugleichen. Dazu sind aber bei inkompressiblen Fluiden nur sehr geringe Ausgleichsvolumina erforderlich, so daß die verfügbaren Geräte zum Ausgleich größerer Differenzvolumina nicht geeignet sind. Sie haben außerdem den prinzipiellen Nachteil, daß das zuerst aufgenommene Material als letztes wieder abgegeben wird, was auch hier lange Verweilzeiten und damit ungünstiges Alterungsverhalten wärmeempfindlicher Schmelzklebstoffe zur Folge haben kann.

Der gleiche Nachteil findet sich bei sogenannten Pufferpressen. Hier wird ein beweglicher, zylindrischer Behälter hydraulisch gegen eine feststehende, genau in den Zylinder eingepaßte Platte gepreßt, in der sich die Zu- und Ablauföffnungen befinden. Auch hier tritt das Fluid an der gleichen Seite des Behälters ein und aus. Durch die zylindrische und mit geringem Länge/Durchmesser-Verhältnis ausgeführte Konstruktion mit einem axial angeordneten Ab- und Zulauf weist dieser Apparatetyp große Bereiche mit nur sehr ungenügendem Fluidaustausch auf, die zur teilweisen Überalterung thermisch sensibler oder verderblicher Fluide führen. Bei gleichen Volumenströmen in Ab- und Zulauf findet schließlich überhaupt kein Austausch des Behälterinhaltes statt. Die Beweglichkeit des gesamten Behälters macht außerdem eine aufwendige Statik des Apparates unumgänglich, insbesondere wenn man die hohen Auspreßdrucke von bis zu 30 bar berücksichtigt. Da es sich hier prinzipiell um eine hydraulische Übersetzung der schlanken Hydraulikzylinder auf den großen Behälterquerschnitt handelt, können derart hohe Leitungsdrucke im Auslauf nur mit enormen Hydraulikanlagen erreicht werden.

Es gibt Druckspeicher zur Vergleichmäßigung eines Fluidstromes, die in der Lage sind, im kontinuierlichen Betrieb sowohl Druck- als auch Durchsatzschwankungen in einem geschlossenen Leitungssystem auszugleichen und gleichzeitig konstante hohe Verarbeitungsdrücke aufzubauen. Die Funktionsweise des Speicherbehälters beruht darauf, daß durch den Behälter ein bestimmtes Volumen Produkt und ein bestimmtes freies Volumen vorgehalten wird. Diese stehen für den Fall zur Verfügung, wenn die fluidliefernde oder die fluidabnehmende Prozeßseite ausfällt.

Der Austrag des Fluids aus dem Speicherbehälter mit einem Förderorgan, wird zum Beispiel über einen pneumatisch angetriebenen beweglichen Stempel durch Druckaufbau unterstützt und konstant gehalten. Eine von der fluidliefernden Prozeßseite verursachte Druckspitze, deren Ursache ein vom Sollvolurnenstrom abweichendes Volumen ist, wird dadurch aufgefangen, daß die mit der Pneumatik verbundene Stempelplatte die Volumendifferenz als Behältervolumen freigibt. Der Vordruck des direkt an den Speicherbehälter angeschlossenen Förderorgans ändert sich dadurch nur, je nach Trägheit des Systems, vemachlässigbar wenig. Die Trägheit des Systems ist beispielsweise vom Reibungsmoment der Stempeldichtungen und dem Volumen der Pneumatikstempel abhängig. Hier ist es sinnvoll möglichst großvolumige oder mit einem Überdruckventil ausgestattete Pneumatikstempel zu verwenden. Dies verhindert, daß eine Kompression des Gases in den Pneumatikstempeln stattfindet. Eine Kompression würde eine Rückwirkung auf die Stempelplatte bewirken, die eine Druckerhöhung oder -senkung im Speicherbehälter und somit des Vordruckes des Förderorgans bewirkt.

Der Stempel ist gegenüber dem Speicherbehälter mit geeigneten Dichtungen gegen Austritt des Fluids über die Stempelplatte abgedichtet. Diese, meist aus der Fassschmelztechnologie hervorgegangenen Apparate gibt es in verschiedenen Ausführungen, die sich im wesentlichen durch die Anordnung der Ein- und Ausspeisepunkte für das Produkt unterscheiden.

Bekannt ist, die Ein- und Ausspeisung des Fluids im Bodenbereich vorzunehmen.

Die Probleme, die bei dieser Lösung auftreten, sind analog zu denen der Pufferpresse.

Aus der DE 36 25 358 A ist ein Verfahren zum Schmelzen von thermoplastischen oder duroplastischen Massen bekannt, insbesondere Schmelzhaftklebstoffen, bei dem die Masse mit einer Umhüllung in eine Schmelzvorrichtung eingegeben wird.

Die Masse wird in Form von Blöcken bereitgestellt, die jeweils einzeln vollständig umhüllt sind. Zum Schmelzen der Blöcke wird eine Druckschmelzvorrichtung verwendet, in der die Blöcke mit der Umhüllung in einen Zylinder mit Hilfe eines Kolbens gegen eine mit Auslasskanälen versehene beheizbare Bodenplatte gepresst werden.

Aufgabe der Erfindung ist es, die Unzulänglichkeiten der aus dem Stand der Technik hervorgehenden Technologien zur Vergleichmäßigung eines temperatursensiblen hochviskosen Fluidstromes durch einen Apparat zu lösen, der in der Lage ist, im kontinuierlichen Betrieb sowohl Druck- als auch Durchsatzschwankungen in einem geschlossenen Leitungssystem auszugleichen, eine enge steuerbare Verweilzeitverteilung zu gewährleisten, große Mengen Fluid zu speichern und konstante hohe Verarbeitungsdrücke aufzubauen.

Des weiteren soll das System folgende weitere Eigenschaften aufweisen:

• Es weitgehend totraumfrei zur Vermeidung der Alterung von insbesondere temperatursensiblen Fluiden sein.
• Es soll einfach konstruiert für Reinigungszwecke sein und eine Kostenersparnis sowie eine hohe Zuverlässigkeit zur Steigerung der gesamten Anlageneffizienz zeigen.

Die Anwendung des Verfahrens ist dabei nicht auf hochviskose temperatursensible Fluide beschränkt, also auch für niedrigviskose Fluide nicht ausgeschlossen, sondern genauso möglich.

Gelöst wird diese Aufgabe durch einen Apparat, wie er im Hauptanspruch dargelegt ist. Die Unteransprüche beschreiben vorteilhafte Weiterbildungen des Erfindungsgegenstands sowie Verfahren zur schonenden Zwischenspeicherung von insbesondere temperatursensiblen hochviskosen Fluiden in geschlossenen Leitungssystemen.

Demgemäß betrifft die Erfindung ein Apparat zur Vergleichmäßigung des Durchsatzes von insbesondere hochviskosen Fluiden in geschlossenen Leitungssystemen, bestehend aus einer bevorzugt beweglichen Zuleitung, einem Behälter, einer in dem Behälter verschiebbaren Platte und einem Austragsaggregat, wobei die Fluide durch die Zuleitung dem Behälter zugeführt werden.

Der Behälter ist an der Zulauföffnung durch eine verschiebbare, gegen die Behälterinnenwände abgedichtete und die Zuleitung tragende Platte und an der Ablauföffnung durch einen Boden und ein daran angebrachtes Austragsaggregat so verschlossen, dass sich das Volumen durch die Differenz der Durchsätze an Zu- und Ablauf und die dadurch bewirkte Verschiebung der Platte selbsttätig ändert

Damit einher geht, dass die Aggregate an Zustromseite und Ablaufseite bei weitgehend konstantem Innendruck bezüglich Durchsatz und Druck voneinander entkoppelt sind.

In einer bevorzugten Ausführungsform ist der Behälter rohrförmig, insbesondere mit kreisförmigen Querschnitt, und/oder längsprofiliert und/oder doppelwandig.

In einer weiteren bevorzugten Ausführungsform ist der Behälter innen mit einer antiadhäsiven und/oder einer antikorrosiven Schicht ausgekleidet.

Die Innenseiten der Platte und des Bodens weisen bevorzugt ein komplementäres, insbesondere konisches Profil auf, so dass das Behältervolumen in der unteren Endstellung der Platte nahezu Null beträgt.

Weiter vorzugsweise ist die Platte so gestaltet, dass das Fluid gleichmäßig über den gesamten Querschnitt des Behälters verteilt wird.

Das Fluid wird vorteilhafterweise innerhalb der Platte durch einen sternförmigen Verteilkanal an den äußeren Rand der Platte so verteilt, dass es gleichmäßig am gesamten Umfang der Platte in den Behälter austritt.

Um eine ausreichende Viskosität der Flüssigkeit zu gewährleisten, können alle vom Fluid berührten Teile des Behälters auf die Eintrittstemperatur des Fluides thermostatisiert sein, wobei die Thermostatisierung bevorzugt elektrisch, vorzugsweise durch Heizleiter oder induktiv, durch Thermalflüssigkeiten wie Wasser oder Thermalöl und/oder durch Dampf erfolgt.

In einer weiteren bevorzugten Ausführungsform wird die Platte durch eine bevorzugt konstante, von der Position der Platte unabhängige Kraft an die Oberfläche des Fluids gepreßt, wobei die Kraft insbesondere durch Pneumatik-Zylinder, durch Hydraulikzylinder und/oder durch ein Gewicht erzeugt wird. In einer weiteren Ausführungsform der Behälter wird die Kraft durch einen Druck über der Stempelplatte erzeugt, und zwar durch Gas, wobei die Stempelplatte zur Abdichtung gegen den Gasraum mit Dichtungen versehen ist.

In einer weiteren bevorzugten Ausführungsform wird das Behältervolumen vollständig vom Fluid ausgefüllt.

Der Innendruck des Behälters an der Zulaufstelle wird bevorzugt nur durch das Eigengewicht der Platte, der auf der Platte lastenden Anlagenteile und die Anpreßkraft der Platte bestimmt.

Der Füllgrad des Behälters und damit die Position der Platte kann unabhängig vom Innendruck des Behälters an der Zulaufstelle sein, ebenso der Innendruck des Behälters an der Zulaufstelle unabhängig vom Füllstand.

In einer weiteren bevorzugten Ausführungsform ist das Austragsaggregat ein Extruder, eine Pumpe, eine Zahnradpumpe, insbesondere eine Polymeraustragspumpe, oder ein Absperrorgan.

Der Behälter kann in einer solchen Betriebsweise gefahren werden, daß sich der Zulauf am Boden des Behälters befindet und der Ablauf durch die Platte erfolgt.

Des weiteren ist vorteilhaft, wenn das Austragsaggregat an der Platte montiert ist oder am freien Ende der beweglichen Zu- und Ableitung.

Besonders vorteilhaft ist, wenn die Position der beweglichen Platte und damit das im Behälter eingeschlossene Volumen über einen Wegaufnehmer meßbar sind und daß die Änderung des gemessenen Volumens zur Regelung der angeschlossenen fluidliefernden und fluidverbrauchenden Aggregate genutzt werden kann.

Die Einspeisung der Schmelze von oben in den Behälter durch einen sich im Behälter vertikal, dem Füllstand folgenden Stempel sowie Ausspeisung im Bodenbereich des Behälters stellt ein Verfahren dar, in dem eine optimalere Verweilzeitverteilung dadurch erreicht wird, daß das sogenannte First-In-First-Out-Prinzip angewendet wird. Das als erstes eintretende Fluid verläßt den Speicher auch als erstes und hat dadurch eine definiertere Verweilzeit als beim Funktionsprinzip bei der Einspeisung im Bodenbereich.

Im Prinzip stellt der Speicher eine Rohrleitung mit großem Durchmesser und variabler Länge dar. Aus der Theorie ("Praktische Rheologie der Kunststoffe und Elastomere" von Pahl, M.; Gleißle, W.; Laun, H.M.; VDI-Gesellschaft Kunststofftechnik, Düsseldorf: VDI-Verl., 1991) und aus der Praxis ist die Verweilzeitverteilung von Fluiden über den Rohrquerschnitt verteilt. Bei einem strukturviskosen Fluid wie zum Beispiel einer Polymerschmelze, mit einem Ostwald/de-Waele Koeffizienten von 0,5, sind nach der mittleren Verweilzeit

$$\bar{t} = \frac{Rohrleitungsl\"ange \ x \ Rohrleitungsfl\"ache}{Gesamt - Volumenstrom},$$

75,7% des Fluids aus der Rohrleitung ausgetreten. Erst nach der 10,2fachen mittleren Verweilzeit sind 99,8% aus der Rohrleitung ausgetreten.

Analog verhält sich der nach dem First-In-First-Out-Prinzip durchströmte Behälter. Diese Verweilzeit fördert die Alterung insbesondere temperatursensibler Fluide insbesondere im beheizten Behälter.

Im folgenden soll die Erfindung mittels mehrerer Figuren näher beschrieben werden.

Es zeigen

Figur 1      einen vertikalen Schnitt durch den Apparat mit Behälter, Boden, Platte samt Plattenführung und Austragsaggregat in einem tragenden Gerüst,

Figur 2      einen vertikalen Schnitt durch die verschiebbare Platte und

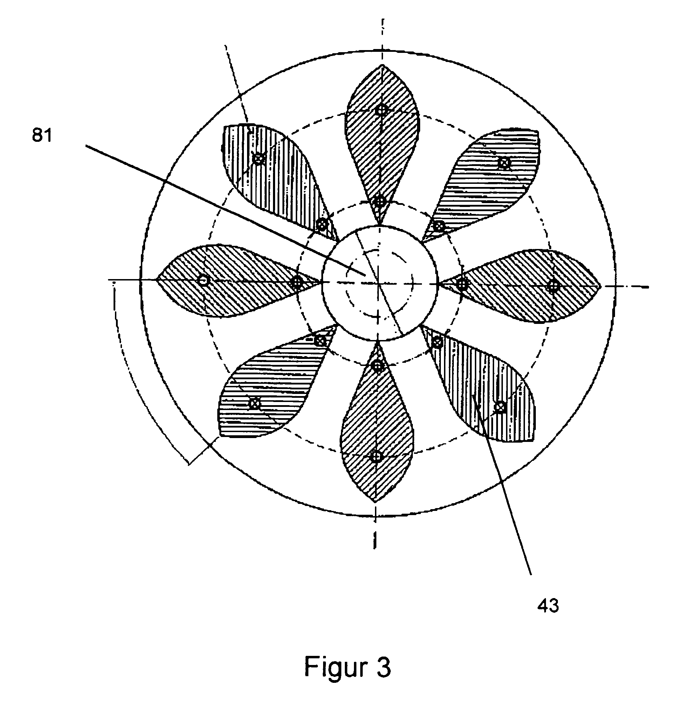

Figur 3      die Draufsicht auf den Verteilkanal der verschiebbaren Platte.

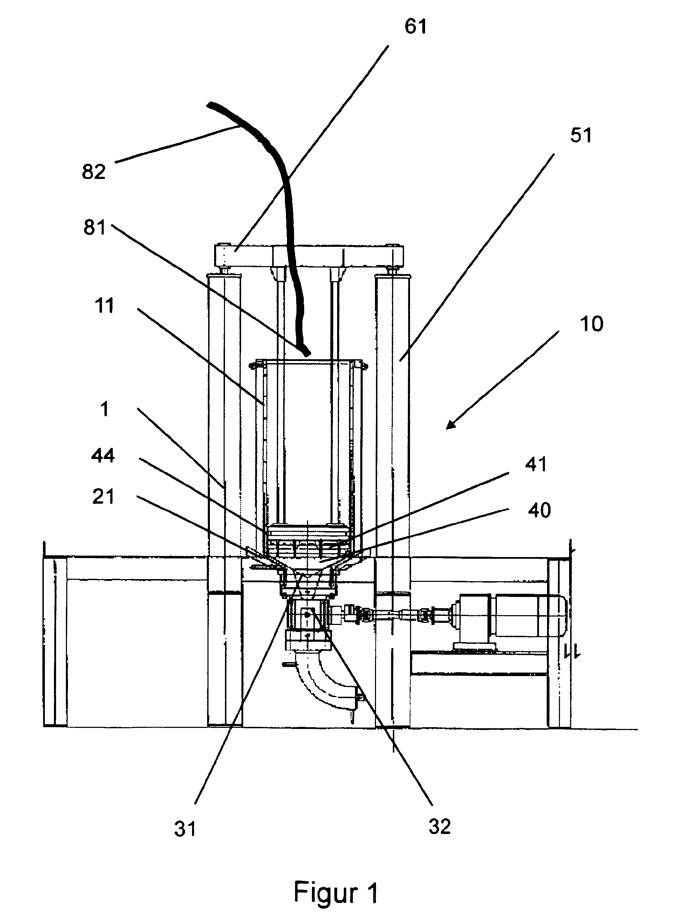

In der Figur 1 ist der zylindrische Behälter 11 zu sehen, der in einem ihn umgebenden Gerüst 1 aufgehängt ist. Der Behälter 11 ist senkrecht aufgestellt. Die senkrechte Anordnung ist bevorzugt, andere Einbaulagen sind jedoch ebenso möglich.

Mit dem Behälter 11 ist der Boden 21 fest verbunden. Die verschiebbare Platte 40 befindet sich im Behälter 11, kann zu Wartungsarbeiten aber mittels der Pneumatikzylinder 51 herausgehoben werden. Der Behälter 11 und der Boden 21 sind vollständig doppelwandig ausgeführt, um eine durchgängige Thermostatisierung zu ermöglichen.

Der Boden des Zylinders 11 wird durch den Boden 21, vorzugsweise einen sich nach unten verjüngenden Konus, gebildet, in dessen Zentrum sich die Ablauföffnung 31 befindet.

Nach oben ist der Zylinder 11 durch eine beheizbare, verschiebbare und gegen die Behälterinnenwand abgedichtete Platte 40 verschlossen. Die Platte 40 wird durch eine außenliegende Führung, zum Beispiel zwei Pneumatikzylinder 51 mit einem Joch 61 und Haltestangen 71 parallel zur Zylinderachse geführt. In der Mitte der Platte 40 befindet sich die Zulauföffnung 81.

Durch eine bewegliche Zuleitung, zum Beispiel einen flexiblen, beheizten Schlauch 82, wird der zu puffemde Fluidstrom der Platte 40 zugeleitet.

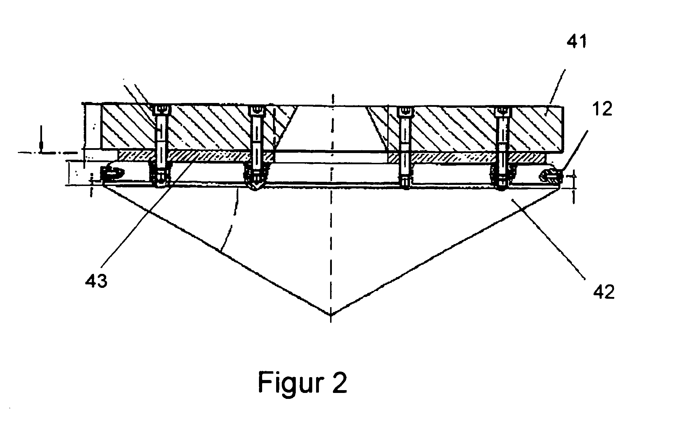

In Figur 2 ist die verschiebbare Platte abgebildet. Die Platte 40 besteht im wesentlichen aus dem oberen Teil 41 und dem unteren Teil 42 und ist so konstruiert, daß der Fluidstrom durch die zwischen dem oberen Teil 41 und dem unteren Teil 42 eingespannten Verteilelemente 43 radialsymmetrisch in den Ringspalt zwischen der Platte 40 und dem Zylinder 11 verteilt wird. Der Ringspalt wird im Folgenden als Zulaufstelle bezeichnet. Die beiden Plattenteile 41 und 42 sind so miteinander verbunden, daß die in den oberen Teil 41 integrierte elektrische Beheizung über die Kontaktflächen der Verteilelemente 43 auch den unteren Teil 42 mitbeheizt. Die Zentrierung der Platte 40 im Behälter 11 erfolgt durch die unter Druckspannung stehenden Dichtringe 44 und gegebenenfalls zusätzlich durch die Nocken 12.

Der untere Teil 42 der Platte ist nach unten hin kegelig und komplementär zum Behälterboden 21 ausgebildet, damit eine gleichmäßige, totraumfreie Durchspülung des Behälters 10 und eine vollständige Restentleerung gewährleistet ist.

Die Pneumatikzylinder 51 erzeugen durch eine entsprechende Regeleinrichtung einen einstellbaren, aber konstanten Druck auf die verschiebbare Platte 40. Dieser Druck lastet zusammen mit dem konstruktionsbedingten Eigengewicht der verschiebbaren Platte 40, ihrer Führung bestehend aus dem Joch 61 und den Haltestangen 71 und der an der Platte befestigten Zuleitung auf dem Behälterinhalt und erzeugt somit einen konstanten Behälterinnendruck. Dieser konstante Innendruck ist von großem Vorteil für die kontinuierliche Entnahme des zu puffemden Fluides.

Diese erfolgt durch die Ablauföffnung 31, an die direkt eine großmäulige Pumpe 32 angeflanscht ist. Diese Pumpe 32 ist vorzugsweise eine Zahnradpumpe oder in einer besonders geeigneten Ausprägung eine Polymeraustragspumpe, die hochviskose Fluide durch eine spezielle Zulaufgeometrie auch aus dem Hochvakuum austragen und Differenzdrucke bis zu 250 bar aufbauen kann.

Die Heizung der Pumpe 32 ist wie alle übrigen Beheizungen vorzugsweise als Ölbegleitheizung ausgeführt, um eine möglichst gleichmäßige Temperierung ohne kalte Stellen oder Überhitzungen zu gewährleisten. Andere flüssige Wärmeträger oder Dampf sind ebenso möglich.

Der Füllstand des Behälters 10 wird beispielsweise über einen analogen Wegaufnehmer gemessen und zur Steuerung der Gesamtanlage herangezogen.

Gemäß der Erfindung wird ein hochviskoses Fluid durch eine flexible Leitung 82 und die Platte 40 mit dem Durchsatz A in den Behälter 10 gefördert. Der Innendruck des Behälters 10 an der Ablauföffnung 31 wird durch den Andruck der Pneumatikzylinder 51 und das Eigengewicht von Platte 40, den darauf lastenden Anbauteilen 71 und 61 und der Zuleitung 82 und den hydrostatischen Druck des Fluids bestimmt. Das Fluid durchströmt den Behälter 10, bedingt durch die spezielle Geometrie, gleichzeitig von außen nach innen und von oben nach unten. Damit wird sichergestellt, daß der Austausch des Fluids vollständig, totraumfrei und mit engem Verweilzeitspektrum erfolgt.

Der Pumpe 32 strömt das Fluid unter dem Innendruck des Behälters 10 durch die Ablauföffnung 31 kontinuierlich zu. Die Pumpe 32 fördert das Fluid mit einem Durchsatz B zur weiteren Verarbeitung.

Bei Differenzen zwischen den Durchsätzen A und B steigt der Füllstand, gemessen vom Wegaufnehmer, langsam an (A>B) oder er sinkt langsam ab (A<B). Dadurch werden die Durchsätze der fluidliefemden und der fluidverbrauchenden Anlagenteile wirksam und vorteilhaft entkoppelt. Da der Innendruck dadurch aber nur wenig beeinflußt wird (der hydrodynamische Druck steuert bei p =1000 kg/m$^3$ nur ca. 100 mbar je Meter Füllstand bei) bleibt der Vordruck der Pumpe 32 und damit ihr Förderverhalten weitestgehend konstant. Dieser bei Zahnradpumpen besonders wünschenswerte konstante Vordruck wirkt sich sehr vorteilhaft auf die Konstanz des Förderdruckes und damit die Produktqualität aus. Außerdem kann über den am Wegaufnehmer abgegriffenen Füllstand und dessen rechnerisch bestimmbare Änderung in die Durchsatzregelung der fluidliefemden und der fluidverbrauchenden Anlagenteile automatisch korrigierend eingegriffen werden, und so eine selbsttätige Durchsatzangleichung vorgenommen werden. Bei gleichen Durchsätzen A und B bleibt der Füllstand konstant, jedoch wird der Behälterinhalt auch in diesem Fall kontinuierlich ausgetauscht, so daß eine Überalterung des Fluides im Behälter wirkungsvoll vermieden wird.

Bei Ausfall der fluidliefernden Anlagenteile (A=0) kann der fluidverbrauchende Anlagenteil für eine gewisse, vom Behältervolumen und dem Ablaufvolumenstrom bestimmte Zeit weiterhin aus dem Behältervolumen gespeist werden, bzw. kann umgekehrt bei Ausfall des fluidverbrauchenden Anlagenteils (B=0) der fluidliefernde Anlagenteil für eine gewisse, vom Füllstand, dem maximalen Behältervolumen, und dem Zulaufvolumenstrom bestimmte Zeit weiter betrieben werden. Damit kann vorteilhafterweise die Effektivität einer solchen Gesamtanlage erheblich gesteigert werden, indem Ab- und Anfahrprozeduren der von kurzzeitigen Störungen nicht direkt betroffenen Anlagenteile entfallen.

Das Volumen des Behälters 10 ist so dimensioniert, daß bei kurzfristig auftretenden Durchsatzdifferenzen (|A-B|) genügend Zeit bleibt, um korrigierend in den Prozeß einzugreifen. Erreicht das zwischen Platte 40 und Behälterboden 21 eingeschlossene Volumen dennoch den Maximal- oder Minimalwert wird der fluidliefernde bzw. der fluidverbrauchende Anlagenteil automatisch über eine in der Prozeßsteuerung hinterlegte Logik abgeschaltet.

Die Temperierung der Apparateteile hat allein die Funktion, die Temperatur des Fluids und damit seine Fließeigenschaften konstant zu halten. Temperaturwechsel sind nur im An- und Abfahrbetrieb vorgesehen.

Des weiteren umfaßt die Erfindung Verfahren zur schonenden Zwischenspeicherung von insbesondere temperatursensiblen hochviskosen Fluiden in geschlossenen Leitungssystemen.

In den erfindungsgemäßen Behältern sind bewegliche Stempel vorhanden, die flexible Förderleitungen erfordern. Diese werden meist durch Schläuche realisiert.

Durch die Verwendung von Schlauchleitungen entstehen folgende Einschränkungen:

Bei der Verarbeitung insbesondere von Polymerschmelzen werden beheizte Rohrleitungen bzw. Schlauchleitungen eingesetzt. Beheizte Schläuche, wie sie bei der Förderung von Polymerschmelzen eingesetzt werden, müssen hohen Drücken standhalten. Schlauchleitungen für hohe Drücke (200 bar und mehr) sind nur mit Querschnitten bis ca. maximal 40 mm herstellbar. Dies begrenzt den Durchsatz eines Speichersystems oder erfordert mehrere parallel betriebene Schläuche. Schläuche haben weiterhin den Nachteil, daß sie schlecht zu reinigen sind. Schwierige Fluide, die beispielsweise zum Vercracken neigen oder sehr adhäsiv und nach der Alterung nur schwer in Lösungsmittel zu lösen sind, werden vorzugsweise durch Ausbrennen der verschmutzten Komponenten entfernt. Dies ist mit, meist hauptsächlich aus organischen Kunststoffen bestehenden, Schläuchen nicht durchführbar.

Das Funktionsprinzip eines Speicherbehälters mit einer beweglichen Stempelplatte besteht u.a. darin, daß Störungsausfälle des fluidliefemden und des fluidabnehmenden Prozesses durch den Speicherinhalt oder das Speicherleervolumen zeitlich, je nach Volumen des Speichers, überbrückt werden. Diese Funktionsweise impliziert, daß der Stempel bei störungsfreiem Prozess eine nahezu konstante Position hat. Bei einer Störung des fluidabnehmenden Prozesses, welche zum Beispiel bei Beschichtungsvorgängen vorkommen, wird der Speicher befüllt und nach der Störung wieder auf Position gefahren. Möglich ist, daß durch die gewünschte Schmierung der Dichtung Fluid an den Behälterwänden im Bereich oberhalb der Stempelplatte zurückbleibt.

Der Bereich oberhalb der Stempelplatte steht in Verbindung mit dem Luftsauerstoff und ist beheizt. Bleiben nun Störungen für eine längere Zeit aus, wird die Behälterwand nicht erneut von den Dichtungen abgereinigt. Hierdurch kommt es bei temperatursensiblen und verderblichen Fluiden zur Alterung derselben. Die Folge ist, daß sich Schichten aufbauen können, die die Funktion beeinträchtigen und aus denen sich bei dem nächsten überfahren durch die Stempelplatte Teile lösen, die in den Prozess gelangen und dort die Produkteigenschaften negativ beeinflussen.

Der Druckaufbau auf die Stempelplatte zum Konstanthalten des Vordrucks und Verbesserung der Fördergenauigkeit des Austragsorgans (zum Beispiel eine Drehkolbenpumpe) wird bevorzugt durch außerhalb vom Speicher aufgestellte Hydraulik- oder Pneumatikkonstruktionen aufgebracht. Die Kraftübertragung findet über eine relativ aufwendige Konstruktion, bestehend aus einem Joch, das über Stangen mit der Stempelplatte verbunden ist, statt.

Die Kapazität eines oben beschriebenen Speichers ist vom Behältervolumen abhängig. Wird bei hohen Gesamtdurchsätzen des Gesamtprozesses eine hohe Speicherkapazität benötigt, ist ein sehr großes Behältervolumen erforderlich. Geeignete Behälter haben entweder einen sehr großen Durchmesser oder sind sehr hoch. Durch eine große Höhe steigen die Druckverluste, insbesondere bei sehr hochviskosen Fluiden, im Behälter an und erfordern eine höhere Druckbeaufschlagung über die Stempelplatte. Ein höherer Druck im Behälter erfordert eine kostenintensivere Auslegung des Behälters. Behälter mit einem großen Durchmesser, bei denen der Druckverlust geringer ist, und der für die Wirkung der Dichtungen der Stempelplatte benötigten Rundheit sind ebenfalls nur sehr kostenintensiv herzustellen. Weiterhin ist die Strömungsführung in Behältern mit großem Durchmesser, insbesondere am Ein- und Auslauf sehr ungünstig. Nicht durchströmte Toträume, insbesondere im Außenbereich um den Ein- und Auslauf entstehen. In Versuchen hat sich gezeigt, daß sich bei Durchmesserverhältnissen von 1:2 (Einlauf : Behälterdurchmesser), trotz absolut laminarer Strömung und Inneneinbauten im Behälter, die eine gewisse Rückverwirbelung (soweit man bei laminaren Strömungen von Wirbeln sprechen kann) bewirken, Toträume bilden.

Das Absaugen des Fluids aus dem Behälter durch vorzugsweise verwendete Zahnradpumpen bereitet Probleme, weil durch geringe Einlaufquerschnitte zur Saugseite der Zahnradpumpe insbesondere bei sehr hochviskosen Fluiden hohe Druckverluste entstehen. Der Zulauf zur Zahnradpumpe wird deshalb durch hohe Drücke, die über die pneumatisch oder hydraulisch angetriebene Stempelplatte aufgebracht werden, realisiert. Dies führt wiederum dazu, daß der Behälter, wie schon beschrieben, auf sehr hohe Drücke ausgelegt werden muß.

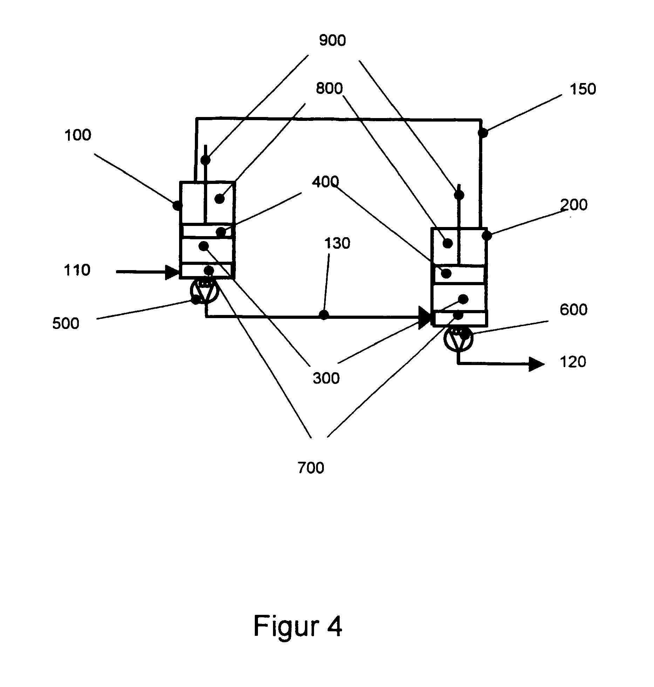

Die Figur 4 zeigt eine Ausführungsform des erfindungsgemäßen Verfahrens.

Das Verfahren zur Eliminierung der beschriebenen Probleme herkömmlicher Speichersysteme für insbesondere temperatursensible hochviskose Fluide umfasst zwei Speicherbehälter 100 und 200, die in Serie geschaltet werden. Der Austausch des im Speichervolumen 300 enthaltenen Fluids und die kontinuierliche Abreinigung der Behälterwände wird durch die kontinuierliche Befüllung und Entleerung und der gleichzeitig herauf- und herunterfahrenden, der mit Dichtungen zur Behälterwand versehenen, Stempelplatte 400 gewährleistet.

Beide Speicherbehälter 100 und 200 werden alternierend gefüllt und entleert. Die Behältervolumen können, je nach Anforderungen an die zu überbrückenden Störungszeiten der fluidliefernden und fluidverbrauchenden Seite, frei ausgelegt werden. In einer hervorragenden Ausführungsform des Vefahrens sind diese volumengleich ausgelegt. Der Speicherbehälter 100 wird von der fluidliefernden Prozessseite gespeist. Die Befüllung und Entleerung der Behälter 100 und 200 wird über die Zahnradpumpe 500 durch Drehzahlerhöhung und -verringerung gesteuert. Die Pumpe 600 läuft mit konstanter Drehzahl wie es der Gesamtdurchsatz des Prozesses erfordert. Aus der +/- Differenz der Solldrehzahl der Pumpe 600 ergibt sich eine steuerbare und definierte Befüll- und Entleerzeit. Bei gleichzeitiger Totraumfreiheit der Speicherbehälter ergibt sich eine definierte Verweilzeit der Masse in den Speicherbehältern.

Totraumfreiheit bedeutet, daß die Stempelplatte nach dem Herabfahren der Stempelplatte flach auf dem Behälterbodenflansch aufliegt und dadurch das Fluid durch den als Kegelstumpf ausgeformten Durchlaß des Bodenflansches 700 drückt. Hierdurch wird gewährleistet, daß die gesamte Fluidmenge aus dem Speicherbehälter der Zahnradpumpe zufließt. Die Einspeisung der insbesondere hochviskosen Masse erfolgt seitlich über einen Flansch in den Kegelstumpf, der gleichzeitig die Bodenplatte des Behälters darstellt. Der Flansch ist mittig mit einem kegelstumpfförmigen, sich nach unten verengenden Loch versehen. Am Ende des Kegelstumpfes ist die Zahnradpumpe befestigt. Die Kegelstumpfform beeinflusst die Strömung des Fluids positiv hinsichtlich niedriger Druckverluste und Toträume. Seitlich durch den Bodenflansch in den Kegelstumpf wird das Fluid über eine Bohrung eingespeist. Dies hat den Vorteil, daß der Speicherbehälter auch, bei nicht auftretenden Störungen auf der fluidliefernden Seite des Prozesses, mit herabgesenkter Stempelplatte gefahren werden kann und der Kegelstumpf kontinuierlich mit Fluid durchströmt wird und somit die Wahrscheinlichkeit der Alterung des Fluids in diesem Bereich gering gehalten wird. Weiterhin kann der Speicherbehälter, zur besseren Demontage, vom Bodenflansch über Schraubenverbindungen getrennt werden. Eine Beheizung des Bodenflansches ist zum Beispiel bei der Verarbeitung von Schmelzklebern notwendig und möglich.

Beide Behälter werden durch geeignete Zahnradpumpen, bevorzugt durch das Modell Vacorex von der Fa. Maag Pump Systems Textron GmbH, entleert. Vom Hersteller ausgewiesen wird das Vermögen, Fluide aus Behältern mit einem Innendruck von 0,1 bar absolut auszutragen. Die Pumpen zeichnen sich durch einen sehr großen Einlaufquerschnitt und enge Fertigungstoleranzen aus. In Versuchen hat sich gezeigt, daß diese Zahnradpumpe(n) in der Lage sind, insbesondere sehr hochviskose Fluide bis zu 50000 Pas aus einem Speicherbehälter, bei einem Vordruck von 2 bar, zu fördern.

Für das Verfahren eignen sich die erfindungsgemäßen Behälter.

Besonders vorteilhaft ist das Verfahren bei Behältern, bei denen der Druck über der Stempelplatte durch Gas erzeugt wird, wobei die Stempelplatte zur Abdichtung gegen den Gasraum 800 mit Dichtungen versehen ist. Die Stempelplatte ist mit einer oder mehreren Führungsstangen 900 durch den Behälterdeckel versehen, die ein Verkanten der Stempelplatte verhindert. Weiterhin wird durch die Führungsstangen die Versorgung der beheizten Stempelplatte mit dem Heizmedium bzw. Kühlmedium gewährleistet.

Das Heiz- bzw. Kühlmedium kann Thermalöl, Wasser und alle gängigen Kühl- und Heizmedien darstellen. Ist nur eine Beheizung notwendig, ist eine alleinige elektrische Beheizung möglich. Der elektrische Anschluß wird durch die Führungsstangen geführt. Die Führungsstangen sind mit geeigneten Dichtungen im Speicherbehälterdeckel versehen, die eine Abdichtung des Gasraumes nach außen bewirken und gleichzeitig eine Führungseigenschaft besitzen. Weiterhin wird die Führungsstange zur elektronischen Aufnahme des Füllstands des Speicherbehälters 10 verwendet. Über die Füllhöhe erfolgt die Drehzahlsteuerung der Zahnradpumpe F.

Die Stempelplatte erfährt den Druck über ein Gaspolster, hier wird bei temperatursensiblen und verderblichen Fluiden vorzugsweise Inertgas verwendet. Das Gas befindet sich im freien Volumen oberhalb der Stempelplatte. Der Vorteil bei dieser Konstruktion besteht darin, daß ein relativ großer Gasraum vorhanden ist, der die Trägheit des Systems hinsichtlich der Dämpfung von Druckspitzen senkt und gleichzeitig eine Inertisierung des Raumes oberhalb der Stempelplatte vorliegt. Der Druck des Gases richtet sich nach dem notwendigen Vordruck für die Zahnradpumpe. Der Behälter ist mit einem abnehmbaren gasgedichteten geeigneten Deckel verschlossen. Damit sich der Gasdruck oberhalb der Stempelplatte bei der Befüllung oder Entleerung des Speicherbehälters im Betrieb nicht verändert, werden die Gasräume, bei volumengleichen Speicherbehältern mit einer geeigneten Gasleitung 110 verbunden. In beiden Speicherbehältern wird so ein konstanter vorgegebener Druck gewährleistet. Gasverluste, die zum Beispiel durch Diffusion durch die Dichtungen stattfinden, werden durch eine über ein einstellbares Überdruckventil mit dem Gasraum verbunden Gasversorgung ausgeglichen. Sinkt der Druck in den Speicherbehältern ab, öffnet das Ventil und das fehlende Gas wird bis zum, mit dem Ventil eingestellten Solldruck, aufgefüllt. Zur Sicherheit gegen Überdruck über den Auslegungsdruck kann an den Gasraum ein Überdruckventil installiert werden.

**Beispiel zum Verfahrensablauf**

**Voraussetzungen**

Von der fluidliefernden Prozessseite 110 wird ein Massenstrom von 100 kg/h geliefert.
Das Fluid weist eine Viskosität von 50000 Pas und Dichte von 950 kg/m$^3$ bei Verarbeitungstemperatur auf.
Die Pumpe 600 liefert konstant 100 kg/h an die fluidverarbeitende Prozeßseite 120, die konstant 100 kg/h verbraucht.
Das Volumen je Speicherbehälter beträgt 105 Liter.

**Prinzipieller Vorgang**

Ausgangspunkt ist, daß der Speicherbehälter 100 vollständig befüllt ist und der Speicherbehälter 200 vollständig leer ist.
Aus Gründen der Vereinfachung wird im folgenden Beispiel eine abrupte Drehzahländerung der Zahnradpumpe 500 beschrieben. Bei Drehzahländerung werden Rampen gefahren. Diese Rampen liegen zeitlich im Sekundenbereich und verlängern die Verweilzeiten nur vemachlässigbar gering.

1. Schritt

In diesem Augenblick erhöht sich die Drehzahl der Zahnradpumpe 500 auf 150 kg/h.
Der Speicherbehälter 100 entleert sich so mit 150 kg/h und wird gleichzeitig seitens der fluidliefernden Prozessseite 110 mit 100 kg/h befüllt. Die Differenz ergibt eine Entleerung mit 50 kg/h. Der Speicherbehälter 200 wird mit 150 kg/h befüllt und gleichzeitig durch die konstant fördernde Zahnradpumpe 600 mit 100 kg/h entleert. Die Differenz ergibt eine Befüllung mit 50 kg/h. Die benötigte Zeit für die Entleerung des Speicherbehälters 100 und Befüllung des Speicherbehälters 200 beträgt insgesamt 2 h.

2. Schritt

Nachdem der Speicherbehälter 200 vollständig gefüllt ist schaltet die Pumpe 500 auf einen Durchsatz von 50 kg/h und der Speicherbehälter 100 füllt sich mit der Differenz der fluidliefemden Prozessseite 110 von 100 kg/h mit 50 kg/h. Der Speicherbehälter 200 wird mit 100 kg/h entleert und 50 kg/h von Pumpe 500 gefüllt, insgesamt also mit 50 kg/h entleert. Die benötigte Zeit für die Entleerung des Speicherbehälters 200 und Befüllung des Speicherbehälters 100 beträgt insgesamt 2 h.

In der Summe hat das Fluid eine Gesamtverweilzeit von 4 h in den Speicherbehältern.

Das gesamte Speichervolumen hinsichtlich Störungsausfällen der fluidverarbeitenden Prozeßseite 120 und fluidliefemden Prozessseite 110 beträgt 100 kg. Hierdurch können Störungszeiten von einer Stunde überbrückt werden.

**Vergleich mit herkömmlichen Speichern**

Ein herkömmlicher Speicherbehälter, der nach dem First-in-First-Out-Prinzip arbeitet und das gleiche Speichervolumen von 105 Litern (100 kg) in Richtung fluidverarbeitender und fluidliefemder Prozeßseite aufweist, hat ein Volumen von 210 Litern.

Errechnet man die mittlere Verweilzeit des Fluids im Speicherbehälter, erhält man mit 100 kg Inhalt und 100 kg/h eine Stunde. Nach dieser Zeit haben 75,7% des Fluids den Behälter verlassen. Für den fast vollständigen Austrag zu 99,8% ist, bei einem strukturviskosen Fluid mit einem Ostwald/de-Waele Exponenten von 0,5, die 10,2fache mittlere Verweilzeit anzusetzen - dies entspricht 10,2 Stunden, rund 2,5 mal so lange wie in dem hier beschriebenen erfundenen System.

Die Betriebsweise des Systems kann je nach Anforderungen auch folgend sein:

Die Fahrweise mit vollständig gefüllten Behältern kann erfolgen, wenn zum Beispiel sichergestellt ist, daß auf der fluidabnehmenden Prozeßseite keine Störungen oder Durchsatzänderungen auftreten, und/oder wenn auf der fluidliefernden Seite eine vorübergehende Unterbrechung vorauszusehen ist.

Die Fahrweise mit vollständig leeren Behältern kann erfolgen, wenn zum Beispiel sichergestellt ist, daß auf der fluidliefernden Prozeßseite keine Störungen auftreten, und/oder auf der fluidabnehmenden Seite eine Unterbrechung vorauszusehen ist.

Folgende Vorteile lassen sich durch das erfindungsgemäße Verfahren verwirklichen:

- kontinuierliche Abreinigung der Behälterwände,
- großes Speichervolumen durch zwei Behälter
- Steuerung des Gesamtsystems über nur eine Zahnradpumpe 500
- keine beheizten Schlauchleitungen im System notwendig
- Verrohrung nur mit geeigneten Stahlleitungen.
- Druckaufbau auf Stempelplatte durch Gasraum 800
- korrespondierende Gasmenge und Leitung 150 zwischen den Behältern
- Inertisierung des Gasraums 800
- Führungsstangen zur Energieversorgung der Stempelplatte und Füllstandsmessung zur Steuerung der Pumpe 500
- einstellbares Überdruckventil zum Ausgleich von Gasveriusten
- Verwendung der großmäuligen Vacorex Zahnradpumpe unter dem Behälter
- Reinigbarkeit der Behälter durch demontierbaren Behälter
- totraumarme Einspeisung der Fluide über einen speziellen Bodenflansch 7
- Verbindung der beiden Speicherbehälter mit Rohrleitungen

Als Fluide können verarbeitet werden temperatursensible und/oder verderbliche Fluide bis 50000 Pas, zum Beispiel Polymerschmelzen wie SIS-Hotmelthaftklebstoffe oder acrylatbasierende oder naturkautschukbasierende Polymerlösungen.

**Patentansprüche**

1. Apparat zur Vergleichmäßigung des Durchsatzes von insbesondere hochviskosen Fluiden in geschlossenen Leitungssystemen, bestehend aus einer Zuleitung (82), einem Behälter (10), einer in dem Behälter (10) verschiebbaren Platte (40) und einem Austragsaggregat (32),
   die Fluide durch die Zuleitung (82) dem Behälter (10) zugeführt werden,

**dadurch gekennzeichnet, dass**
der Behälter (10)
an der Zulauföffnung durch eine verschiebbare, gegen die Behälterinnenwände abgedichtete und die Zuleitung (82) tragende Platte (40) und
an der Ablauföffnung (31) durch einen Boden (21) und dem daran angebrachten Austragsaggregat (32) so verschlossen ist,
dass sich das Volumen des Behälters (10) durch die Differenz der Durchsätze an Zu- und Ablauf und die **dadurch** bewirkte Verschiebung der Platte (40) selbsttätig ändert.

2. Apparat nach Anspruch 1, **dadurch gekennzeichnet, dass** der Behälter (10) rohrförmig, insbesondere mit kreisförmigen Querschnitt, und/oder längsprofiliert und/oder doppelwandig ist.

3. Apparat nach den Ansprüchen 1 und 2, **dadurch gekennzeichnet, dass** der Behälter (10) innen mit einer antiadhäsiven und/oder einer antikorrosiven Schicht ausgekleidet ist.

4. Apparat nach den Ansprüchen 1 bis 3, **dadurch gekennzeichnet, dass** die Innenseiten der Platte (40) und des Bodens (21) ein komplementäres, insbesondere konisches Profil aufweisen.

5. Apparat nach den Ansprüchen 1 bis 4, **dadurch gekennzeichnet, dass** die Platte (40) so gestaltet ist, dass das Fluid gleichmäßig über den gesamten Querschnitt des Behälters (10) verteilt wird.

6. Apparat nach den Ansprüchen 1 bis 5, **dadurch gekennzeichnet, dass** das Fluid innerhalb der Platte (40) durch einen sternförmigen Verteilkanal an den äußeren Rand der Platte (40) so verteilt wird, dass es gleichmäßig am gesamten Umfang der Platte (40) in den Apparat austritt.

7. Apparat nach mindestens einem der vorhergehenden Ansprüche, **dadurch gekennzeichnet, dass** alle vom Fluid berührten Teile des Behälters (10) auf die Eintrittstemperatur des Fluides thermostatisiert sind.

8. Apparat nach mindestens einem der vorhergehenden Ansprüche, **dadurch gekennzeichnet, dass** die Thermostatisierung elektrisch, vorzugsweise durch Heizleiter oder induktiv, durch Thermalflüssigkeiten wie Wasser oder Thermalöl und/oder durch Dampf erfolgt.

9. Apparat nach mindestens einem der vorhergehenden Ansprüche, **dadurch gekennzeichnet, dass** die Platte (40) durch eine insbesondere konstante, von der Position der Platte (40) unabhängige Kraft an die Oberfläche des Fluids gepresst wird.

10. Apparat nach Anspruch 9, **dadurch gekennzeichnet, dass** die Kraft durch Pneumatik-Zylinder (51), durch Hydraulikzylinder und/oder durch ein Gewicht erzeugt wird.

11. Apparat nach mindestens einem der vorhergehenden Ansprüche, **dadurch gekennzeichnet, dass** das Behältervolumen vollständig vom Fluid ausgefüllt wird.

12. Apparat nach mindestens einem der vorhergehenden Ansprüche, **dadurch gekennzeichnet, dass** der Innendruck des Apparats an der Zulaufstelle nur durch das Eigengewicht der Platte (40), der auf der Platte (40) lastenden Anlagenteile (61, 71) und die Kraft der Platte (40) bestimmt wird.

13. Apparat nach mindestens einem der vorhergehenden Ansprüche, **dadurch gekennzeichnet, dass** der Füllgrad des Behälters (10) und damit die Position der Platte (40) unabhängig von Innendruck des Apparats (10) an der Zulaufstelle ist.

14. Apparat nach mindestens einem der vorhergehenden Ansprüche, **dadurch gekennzeichnet, dass** das Austragsaggregat (32) ein Extruder, eine Pumpe, eine Zahnradpumpe, insbesondere eine Polymeraustragspumpe, oder ein Absperrorgan ist.

15. Verfahren zur schonenden Zwischenspeicherung von insbesondere temperatursensiblen hochviskosen Fluiden in geschlossenen Leitungssystemen mit zumindest zwei, in Serie geschalteten Behältern (100, 200) gemäß zumindest einem der vorherigen Ansprüche, wobei die Fluide dem ersten Behälter (100), die Fluide über eine Fördereinrichtung (500) dem zweiten Behälter (200), die Fluide gegebenenfalls über Fördereinrichtungen (500) den weiteren Behältern zugeführt werden, wobei der Austrag der Fluide aus dem letzten Behälter über eine Austragsvorrichtung (600) erfolgt

16. Verfahren nach Anspruch 15, **dadurch gekennzeichnet, dass** die Fördereinrichtung (500) eine Zahnradpumpe ist.

17. Verfahren nach den Ansprüchen 15 und 16, **dadurch gekennzeichnet, dass** das Austragsorgan (600) kontinuierlich betrieben wird.

**Claims**

1. Apparatus for the equilibration of the throughput of, in particular, highly viscous fluids in closed line systems, comprising a supply line (82), a tank (10), a plate (40) which is displaceable in the tank (10) and a discharge unit (32), fluids are fed to the tank (10) through the supply line (82), **characterized in that** the tank (10)
is closed at the inflow opening by a displaceable plate (40), which is sealed against the inside walls of the tank and bears the supply line (82), and
at the outflow opening (31) by a base (21) and the discharge unit (32) attached thereto,
closed in such a way that the volume of the tank (10) changes automatically as a result of the difference in the throughputs at the inflow and outflow and the resultant displacement of the plate (40).

2. Apparatus according to Claim 1, **characterized in that** the tank (10) is tubular, in particular with a circular cross section, and/or longitudinally profiled and/or double-walled.

3. Apparatus according to Claims 1 and 2, **characterized in that** the tank (10) is lined on the inside with an anti-adhesive layer and/or an anticorrosive layer.

4. Apparatus according to Claims 1 to 3, **characterized in that** the inner sides of the plate (40) and of the base (21) have a complementary, in particular conical, profile.

5. Apparatus according to Claims 1 to 4, **characterized in that** the plate (40) is designed such that the fluid is evenly distributed over the entire cross section of the tank (10).

6. Apparatus according to Claims 1 to 5, **characterized in that** the fluid is distributed within the plate (40) by a star-shaped distributing channel to the outer edge of the plate (40) in such a way that it leaves into the tank evenly over the entire periphery of the plate (40).

7. Apparatus according to at least one of the preceding claims, **characterized in that** all the parts of the tank (10) with which the fluid comes into contact are thermostatically controlled to the inflow temperature of the fluid.

8. Apparatus according to at least one of the preceding claims, **characterized in that** the thermostatic control takes place electrically, preferably by heating conductors, or inductively, by thermal fluids such as water or thermal oil and/or by steam.

9. Apparatus according to at least one of the preceding claims, **characterized in that** the plate (40) is pressed against the surface of the fluid by a force, in particular a constant force, which is independent of the position of the plate (40).

10. Apparatus according to Claim 9, **characterized in that** the force is generated by pneumatic cylinders (51), by hydraulic cylinders and/or by a weight.

11. Apparatus according to at least one of the preceding claims, **characterized in that** the tank volume is completely filled by the fluid.

12. Apparatus according to at least one of the preceding claims, **characterized in that** the internal pressure of the apparatus at the inflow point is determined only by the own weight of the plate (40), of the parts of the installation (61,71) exerting a load on the plate (40) and the force of the plate (40).

13. Apparatus according to at least one of the preceding claims, **characterized in that** the degree of filling of the tank (10), and consequently the position of the plate (40), is independent of the internal pressure of the apparatus (10) at the inflow point.

**14.** Apparatus according to at least one of the preceding claims, **characterized in that** the discharge unit (32) is an extruder, a pump, a gear pump, in particular a polymer discharge pump, or a shut-off element.

**15.** Method for the conserving intermediate storage of, in particular, temperature-sensitive highly viscous fluids in closed line systems with at least two tanks (100, 200) according to at least one of the preceding claims connected in series, the fluids being fed to the first tank (100), the fluids being fed via a delivery device (500) to the second tank (200), the fluids being fed if appropriate via delivery devices (500) to the further tanks, the discharge of the fluids from the last tank taking place via a discharge device (600).

**16.** Method according to Claim 15, **characterized in that** the delivery device (500) is a gear pump.

**17.** Method according to Claims 15 and 16, **characterized in that** the discharge element (600) is operated continuously.

**Revendications**

**1.** Appareil pour réguler le débit de fluides en particulier très visqueux dans des systèmes de conduites fermés, constitué d'une conduite d'alimentation (82), d'un récipient (10), d'une plaque (40) capable de se déplacer dans le récipient (10) et d'un organe d'extraction (32), les fluides étant amenés au récipient (10) par la conduite d'alimentation (82), **caractérisé en ce que** le récipient (10) est fermé du côté de l'ouverture d'entrée par une plaque (40) capable de se déplacer, étanchée contre les parois intérieures du récipient et portant la conduite d'alimentation (82), et du côté de l'ouverture de sortie (31) par un fond (21) et l'organe d'extraction (32) monté sur celui-ci, de telle sorte que le volume du récipient (10) varie automatiquement suite à la différence des débits à l'entrée et à la sortie et au déplacement de la plaque (40) provoqué par celle-ci.

**2.** Appareil selon la revendication 1, **caractérisé en ce que** le récipient (10) est de forme tubulaire, en particulier avec une section transversale circulaire, et/ou profilé longitudinalement et/ou à double paroi.

**3.** Appareil selon les revendications 1 et 2, **caractérisé en ce que** le récipient (10) est revêtu intérieurement d'une couche antiadhésive et/ou anticorrosive.

**4.** Appareil selon les revendications 1 à 3, **caractérisé en ce que** les côtés intérieurs de la plaque (40) et du fond (21) présentent un profil complémentaire en particulier conique.

**5.** Appareil selon les revendications 1 à 4, **caractérisé en ce que** la plaque (40) est conformée de telle sorte que le fluide soit distribué uniformément sur toute la section transversale du récipient (10).

**6.** Appareil selon les revendications 1 à 5, **caractérisé en ce que** le fluide est distribué au sein de la plaque (40) par un canal de distribution en forme d'étoile sur le bord extérieur de la plaque (40), de telle sorte qu'il sorte uniformément dans l'appareil sur toute la circonférence de la plaque (40).

**7.** Appareil selon au moins l'une quelconque des revendications précédentes, **caractérisé en ce que** toutes les parties du récipient (10) en contact avec le fluide sont thermostatisées à la température d'entrée du fluide.

**8.** Appareil selon au moins l'une quelconque des revendications précédentes, **caractérisé en ce que** la thermostatisation a lieu électriquement, de préférence par des conducteurs chauffants, ou par induction, par des fluides thermiques comme par exemple de l'eau ou de l'huile thermique, et/ou par de la vapeur.

**9.** Appareil selon au moins l'une quelconque des revendications précédentes, **caractérisé en ce que** la plaque (40) est pressée contre la surface du fluide par une force en particulier constante indépendante de la position de la plaque (40).

**10.** Appareil selon la revendication 9, **caractérisé en ce que** la force est générée par des vérins pneumatiques (51), par des vérins hydrauliques et/ou par un poids.

**11.** Appareil selon au moins l'une quelconque des revendications précédentes, **caractérisé en ce que** le volume du récipient est complètement rempli de fluide.

**12.** Appareil selon au moins l'une quelconque des revendications précédentes, **caractérisé en ce que** la pression interne de l'appareil au point d'entrée est déterminée uniquement par le poids propre de la plaque (40), les parties de l'installation (61, 71) exerçant une charge sur la plaque (40) et la force de pression sur la plaque (40).

**13.** Appareil selon au moins l'une quelconque des revendications précédentes, **caractérisé en ce que** le degré de remplissage du récipient (10) et dès lors la position de la plaque (40) sont indépendants de la pression interne de l'appareil (10) au point d'entrée.

**14.** Appareil selon au moins l'une quelconque des revendications précédentes, **caractérisé en ce que** l'organe d'extraction (32) est une extrudeuse, une pompe, une pompe à engrenages, en particulier une pompe d'extraction de polymères, ou un organe d'arrêt.

**15.** Procédé de stockage intermédiaire ménageant le produit de fluides en particulier très visqueux sensibles à la température dans des systèmes de conduites fermés comportant au moins deux récipients (100, 200) reliés en série selon au moins l'une quelconque des revendications précédentes, les fluides étant amenés au premier récipient (100), au deuxième récipient (200) par l'intermédiaire d'un dispositif de transport (500), le cas échéant aux autres récipients par l'intermédiaire de dispositifs de transport (500), l'extraction des fluides du dernier récipient ayant lieu par l'intermédiaire d'un dispositif d'extraction (600).

**16.** Procédé selon la revendication 15, **caractérisé en ce que** le dispositif de transport (500) est une pompe à engrenages.

**17.** Procédé selon les revendications 15 et 16, **caractérisé en ce que** l'organe d'extraction (600) fonctionne en continu.

Figur 1

Figur 2

81

43

Figur 3

Figur 4